# EUROPÄISCHE PATENTANMELDUNG

(11) **EP 4 649 794 A1**
(43) Veröffentlichungstag der Anmeldung: **19.11.2025**
(21) Anmeldenummer: 25175989.0
(22) Anmeldetag: 13.05.2025
(51) Int. Cl.: A01B 33/02

(54) **LANDWIRTSCHAFTLICHE ARBEITSMASCHINE**

(30) Priorität: 14.05.2024 DE 202024102482 U
(71) Anmelder: Grimme Landmaschinenfabrik GmbH & Co. KG, 49401 Damme (DE)
(72) Erfinder: Lange gen. Detert, Ansgar, 49324 Melle (DE); Böging, Michael, 49424 Goldenstedt/Lutten (DE); Dernjac, Kai, 49377 Vechta (DE); Dreishing, Michael, 49434 Neuenkirchen-Vörden (DE)
(74) Vertreter: Wischmeyer, André

(57) **Zusammenfassung**

Die Erfindung betrifft eine landwirtschaftliche Arbeitsmaschine, insbesondere in Form einer vorzugsweise als Bodenfräse ausgebildeten Bodenbearbeitungsmaschine, umfassend eine mit wenigstens einem Werkzeug versehene Welle, deren Drehachse sich im Betrieb angewinkelt zur Fahrtrichtung und zumindest im Wesentlichen parallel zum Untergrund erstreckt, und umfassend ein an einem Rahmen der Arbeitsmaschine angeordnetes Gehäuse, welches zumindest abschnittsweise oberhalb der Welle angeordnet ist und eine einen Kanal zwischen Welle und Gehäuse begrenzende Innenwand aufweist, wobei die Innenwand des Gehäuses durch mehrere in Fahrtrichtung betrachtet nebeneinander angeordnete Segmente zumindest mit ausgebildet ist.

## Beschreibung

Die vorliegende Erfindung betrifft einen Gegenstand nach dem Oberbegriff des Anspruchs 1.

Aus der EP 0 954 053 B1 ist eine landwirtschaftliche Arbeitsmaschine in Form einer Bodenbearbeitungsmaschine bekannt, die einen Rotor, d.h. eine Welle mit Werkzeug, aufweist, dessen Drehachse sich im Betrieb angewinkelt zur Fahrtrichtung und zumindest im Wesentlichen parallel zum Untergrund erstreckt. Der Rotor ist durch ein an einem Rahmen der Arbeitsmaschine angeordnetes Gehäuse, welches zumindest abschnittsweise oberhalb der Welle des Rotors angeordnet ist, teilweise eingehaust. Das Gehäuse umfasst eine Innenwand, welche einen Kanal zwischen Welle und Gehäuse ausbildet bzw. nach oben begrenzt. Bei einer Beschädigung des Gehäuses durch zum Beispiel Steine ist diese aufwendig auszutauschen und komplett zu ersetzen.

Es ist Aufgabe der vorliegenden Erfindung, eine erfindungsgemäße Bodenbearbeitungsmaschine materialschonender einsetzen zu können.

Die Aufgabe wird gelöst durch einen Gegenstand gemäß Anspruch 1. Vorteilhafte Ausgestaltungen der Erfindung sind den Unteransprüchen sowie der nachfolgenden Beschreibung zu entnehmen.

Erfindungsgemäß zeichnet sich eine landwirtschaftliche Arbeitsmaschine dadurch aus, dass eine den Kanal zwischen Welle und Gehäuse begrenzende Innenwand des Gehäuses durch mehrere in Fahrtrichtung betrachtet nebeneinander angeordnete Segmente zumindest ausgebildet ist. Entsprechend weist jedes dieser Segmente eine in Richtung der flächigen Erstreckung der Segmente verlaufende Seite auf, die eine innere Begrenzung des Kanals darstellt.

Die Erfindung beruht auf der Erkenntnis, dass aufgrund der in Umfangsrichtung zumindest teilweise um die Drehachse der Welle beförderten Materialien der maßgebliche Verschleiß ebenfalls hauptsächlich in Umfangsrichtung um die Welle herum an der Innenwand des Gehäuses auftritt. Eine Innenwand im Sinne der Erfindung ist eine Wand, die den Kanal nach innen hin, d.h. vom Gehäuse in Richtung der Welle oder Drehachse begrenzt. Bei einschaligen Gehäusen ist die Innenwand gleichzeitig auch eine Außenwand. Durch die Segmentierung des Gehäuses in Umfangsrichtung können einzelne Segmente des Gehäuses ausgetauscht werden, die zu stark verschleißbehaftet sind, während weniger verschleißbehaftete Bereiche weiter verwendet werden können. Die Segmente sind lösbar aneinander festgelegt. Insofern ist der Einsatz eines segmentierten Gehäuses, welches über die Breite des Gehäuses bzw. entlang der Länge der Welle mehrere Segmente besitzt, materialschonender.

Die Segmente sind flächig, insbesondere im Wesentlichen streifenförmig und/oder identisch ausgebildet. Durch die streifenförmige Ausbildung der Segmente, d.h. eine größere Erstreckung des Segments in Längsrichtung (parallel zur Fahrtrichtung bzw. um die Welle herum verlaufend betrachtet) als in Querrichtung sowie eine gegenüber der Länge der Segmente vernachlässigbare Dicke größerer Bereiche des Segments, ergibt sich weiterhin eine materialschonende und insbesondere auch herstellungsfreundliche Ausbildung der Arbeitsmaschine. Durch den Gleichteileansatz der Segmente des Gehäuses kann dieses vergünstigt hergestellt sowie einfacher repariert werden.

Die Segmente sind insbesondere in Richtung ihrer Längserstreckung gekrümmt ausgebildet, um einen entsprechenden Kanalverlauf um die Welle herum nachzuempfinden.

Das Gehäuse ist dergestalt oberhalb der Welle angeordnet, dass betrachtet in Längsrichtung der Drehachse und bezüglich einer Lotrechten auf der Welle bzw. einer entsprechenden Fläche entlang derselben das Gehäuse innerhalb eines Winkels von zumindest +/- 30° um die Drehachse ausgebildet ist, insbesondere über einen Schwenkwinkel von 90° bis 180°. Der Kanal ist der zwischen der Welle und dem Gehäuse ausgebildete Bereich, wobei während des Betriebs den Kanal durchstreifende Werkzeuge der Welle nicht berücksichtigt werden.

Vorteilhafterweise weist das Gehäuse bezüglich der Fahrtrichtung einen vorderen und einen hinteren Gehäuseteil mit jeweiligen Innenwandteilen auf, die sich jeweils entlang der Welle erstrecken und von denen der eine durch die mehreren nebeneinander angeordneten Segmente ausgebildet ist und von denen der andere ebenfalls durch mehrere in Fahrtrichtung betrachtet nebeneinander angeordnete, weitere Segmente zumindest mit ausgebildet ist. Insbesondere werden die Innenwandteile vollständig durch die insbesondere identisch ausgebildeten Segmente des vorderen und des hinteren Gehäuseteils ausgebildet. Der Gleichteileansatz gilt somit für die gesamte Innenwand, auch wenn diese zweigeteilt ist. In einer Draufsicht auf das Gehäuse weist dasselbe somit zwei nebeneinander ausgebildete Reihen von Segmenten auf, die die Innenwand und somit die obere Begrenzung des Kanals, durch den von der Bodenbearbeitungsmaschine der bearbeitete Boden transportiert wird, darstellen.

Durch die Verwendung eines elastomeren Materials für die Segmente, die zumindest überwiegend durch dieses Material ausgebildet sind, lassen sich auf geeignete Weise Gehäuseformen abbilden, ohne dass aufwendige Biege- oder Kantprozesse, wie sie im Stand der Technik benötigt werden, verwendet werden. Zumindest überwiegend ist die Ausbildung aus einem elastomeren Material dann, wenn das elastomere Material den größten Anteil der Innenwand darstellt, alternativ oder ergänzend, wenn das elastomere Material zumindest zu mehr als 50 % des Volumens der Innenwand ausbildet.

Die Segmente sind betrachtet in Richtung um die Welle herum länger als (in axialer Richtung der Welle) breit, was dem vorbezeichneten Verschleißvorgang Rechnung trägt.

Zur Stabilisierung der Segmente können diese wenigstens einen vorzugsweise entlang einer Längskante verlaufenden Längssteg aufweisen, der zusätzlich für die Befestigung der Segmente aneinander, an einem Rahmen und/oder einem Gehäuserahmen verwendbar ist.

Insbesondere weisen die Segmente auf zumindest einer Längsseite einen Rücksprung auf, dergestalt, dass nebeneinander angeordnete Segmente teilweise überlappend angeordnet sind, so dass einerseits verhindert wird, dass aus dem Kanal Erde über diesen Dichtungsbereich aneinander angrenzender Segmente aus dem Kanal entfernt wird im Betrieb und andererseits eine verbesserte Festlegung der Segmente aneinander erreicht wird. Zur Anordnung identischer Segmente aneinander weisen voneinander abgewandte Längsseiten desselben Segments entsprechend komplementäre Rücksprünge auf, beispielsweise in Form einer Nut und Federausführung oder anders gearteter radialer und/oder axialer Verschränkung der Segmente.

Zusätzlich zu den Segmenten können gemäß einer weiteren Fortbildung der Erfindung Ausgleichsstücke vorgesehen werden, welche die Rotorwelle wie die Segmente vorteilshafterweise in einem erdflussoptimierten, d.h. für den Erdfluss relevanten, Winkelbereich umgrenzen und die zur Verbreiterung des Gehäuses zusätzlich an den Segmenten insbesondere als seitlicher Abschluss bzw. seitliche Abschlüsse angebracht werden können. Diese Ausgleichselemente können zumindest in etwa dieselben Abmessungen wie die Segmente selbst aufweisen. Insbesondere ist die Innenwand des Gehäuses jedoch ohne die Ausgleichsstücke ausgebildet.

Auf ihrer von der Welle abgewandten Seite weisen die Segmente gemäß einer vorteilhaften Weiterbildung der Erfindung Befestigungsmittel zur Befestigung des jeweiligen Segments an dem Rahmen, einem Gehäuserahmen oder auch zur Befestigung an einem weiteren Segment auf. Diese können insbesondere durch den oder die Längsstege ausgebildet werden. Insbesondere bei der Verwendung von elastomeren Materialien, die in einem Gieß- oder Spritzvorgang eingesetzt werden, können somit deutlich vielfältigere Befestigungsformen und -konturen erstellt werden, die für einen optimalen Materialeinsatz ausgelegt werden können.

Zur Versteifung zumindest eines der Segmente und/oder des Gehäuses ist wenigstens ein Querträger vorgesehen, an dem die Segmente befestigt werden können. Dieser erstreckt sich insbesondere vollständig entlang der Welle parallel zu deren Längs- bzw. Drehachse.

Insbesondere sind eine Mehrzahl von Segmenten, vorzugsweise sämtliche Segmente eines Gehäuseteils, an einem oder mehreren, dann in Fahrtrichtung hintereinander angeordneten Querträgern angeordnet. Hierfür können beispielsweise Ausnehmungen der Seitenstege vorgesehen sein, durch die ein Querträger hindurchgeführt werden kann.

Gleichermaßen kann auch ein Längsträger vorgesehen sein, der einzelne Querträger gegeneinander sichert bzw. für eine Versteifung des Gehäuseteils in Längsrichtung Sorge trägt.

Über ein Auffädeln der Segmente mittels in den Längsstegen vorhandener Aufnahmen in Form von Ausnehmungen des Materials lassen sich die Segmente schnell und einfach nebeneinander anordnen und im Bedarfsfall einzeln tauschen. Es versteht sich, dass dafür die Querträger zumindest einseitig von der Arbeitsmaschine lösbar sind.

Insbesondere über solche Quer- und Längsträger und deren Einwirkung auf die Segmente können diese eine Mehrzahl von Betriebszuständen mit unterschiedlichen Krümmungsradien, d.h. unterschiedlichen Abständen zur Drehachse der Welle, aufweisen. Hierbei versteht es sich, dass es sich nicht um einen festen Radius für einen Betriebszustand handeln muss, sondern dass der Abstand über den Umfangswinkel um die Drehachse der Welle herum variieren kann. Als Abstand ist hierbei der Abstand von der Drehachse zur inneren Oberfläche des jeweiligen Segments, betrachtet entlang eines Umfangs und in Richtung der Drehachse zu verstehen.

Vorteilhafterweise ist eine Stellvorrichtung vorgesehen, über die die Position und/oder der Krümmungsradius der Innenwand bezogen auf die Welle bzw. die Drehachse veränderbar ist. Insbesondere handelt es sich hierbei um eine Stellvorrichtung, die ein Stellmittel aufweist, welches an einem Quer- oder Längsträger oder einen anderen Teil des Gehäuserahmens angreift und die Position des Gehäuserahmens ändert, so dass die an dem Rahmen angeordneten Segmente ebenfalls ihre Position ändern müssen.

Die Stellvorrichtung kann insbesondere ein hinteres Stellmittel aufweisen, welches auf einen hinteren Gehäuseteil einwirkt und dessen hintere Kante in der Höhe und/oder entlang der Fahrtrichtung verstellt, so dass die Segmente unterschiedliche Abstände zur Drehachse der Welle einnehmen und insofern in unterschiedliche Betriebspositionen überführbar sind.

Weitere Vorteile und Einzelheiten der Erfindung sind der nachfolgenden Figurenbeschreibung zu entnehmen. Schematisch dargestellt zeigt:
- Fig. 1: einen erfindungsgemäßen Gegenstand in einer isometrischen Ansicht,
- Fig. 2: einen Teil des Gegenstands nach Fig. 1,
- Fig. 3: eine Detailansicht eines Gehäuseteils eines erfindungsgemäßen Gegenstands,
- Fig. 4: eine weitere Detailansicht eines erfindungsgemäßen Gegenstands,
- Fig. 5: den Gegenstand nach Fig. 2 in einer teilweise aufgebrochenen Ansicht,
- Fig. 6: den Gegenstand nach Fig. 2 in zwei verschiedenen Betriebsstellungen,
- Fig. 7: eine weitere Teilansicht des Gegenstands nach Fig. 1,
- Fig. 8: eine weitere Ausbildung eines erfindungsgemäßen Gegenstands in einer Ansicht gemäß Fig. 7,
- Fig. 9: eine Prinzipdarstellung eines weiteren erfindungsgemäßen Gegenstands,
- Fig. 10: eine Prinzipdarstellung eines weiteren erfindungsgemäßen Gegenstands.

Einzelne technische Merkmale der nachbeschriebenen Ausführungsbeispiele können auch in Kombination mit vorbeschriebenen Ausführungsbeispielen sowie den Merkmalen des unabhängigen Anspruchs und etwaiger weiterer Ansprüche zu erfindungsgemäßen Gegenständen kombiniert werden. Sofern sinnvoll werden funktional zumindest in Teilen gleichwirkende Elemente mit identischen Bezugsziffern versehen.

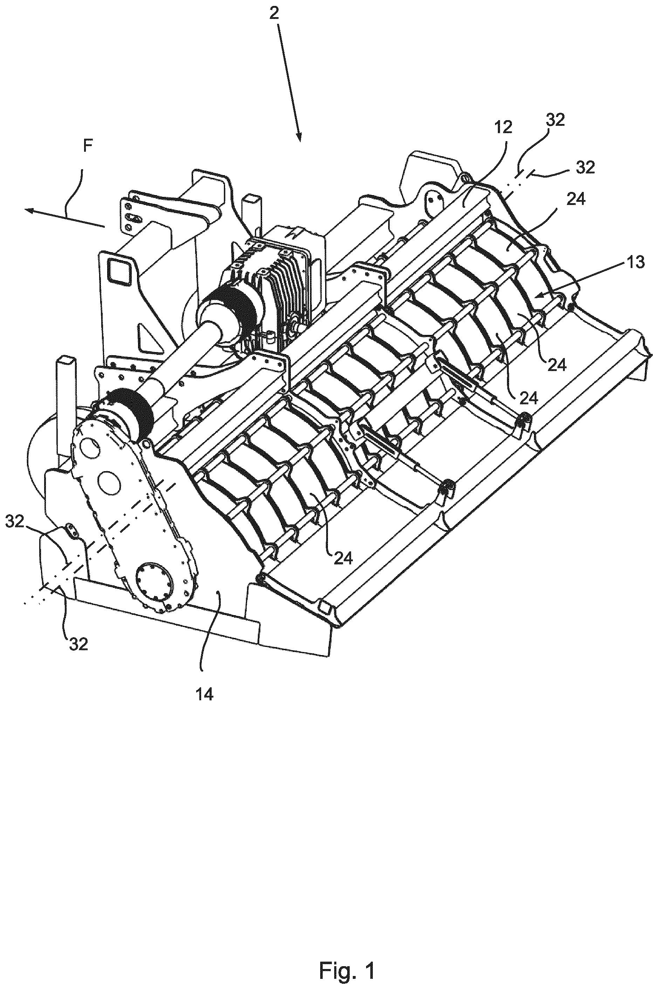

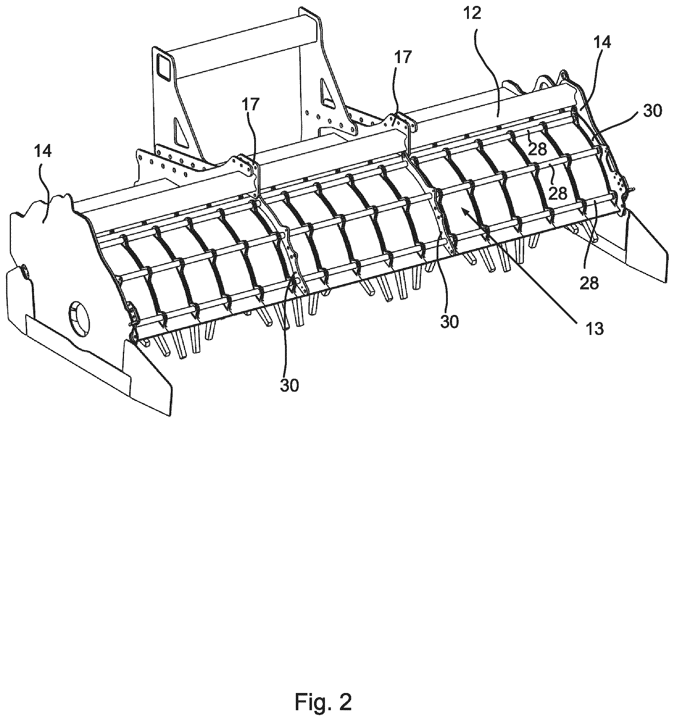

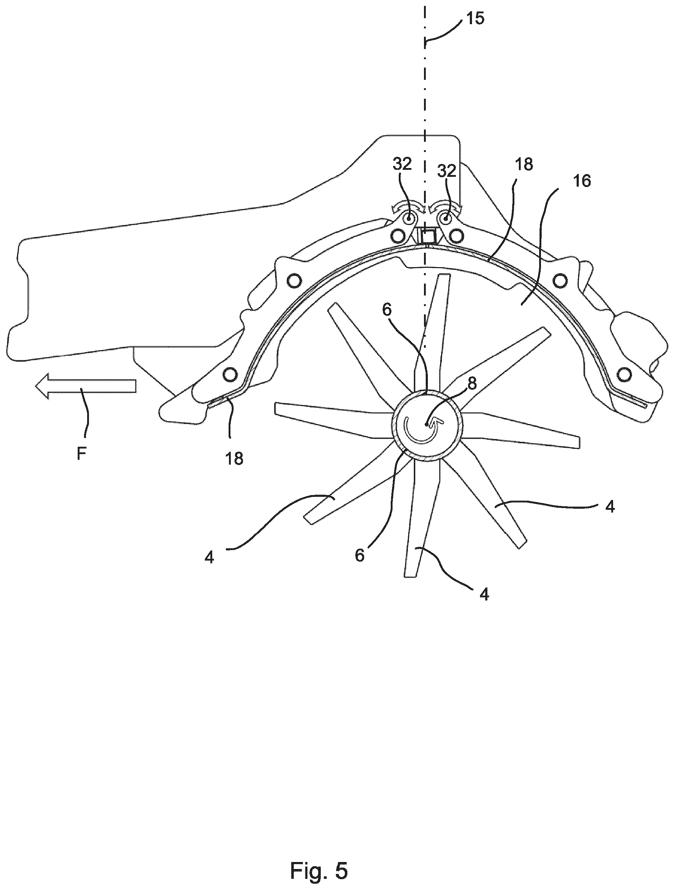

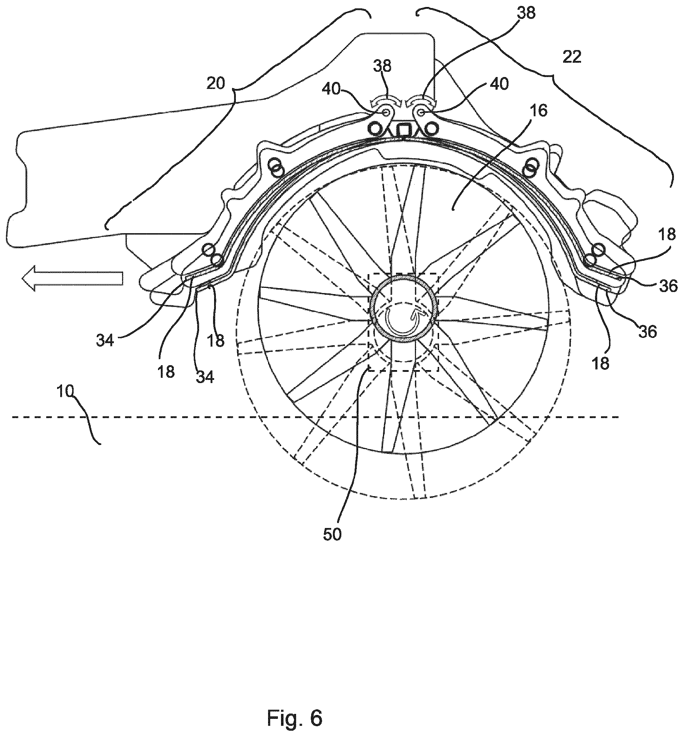

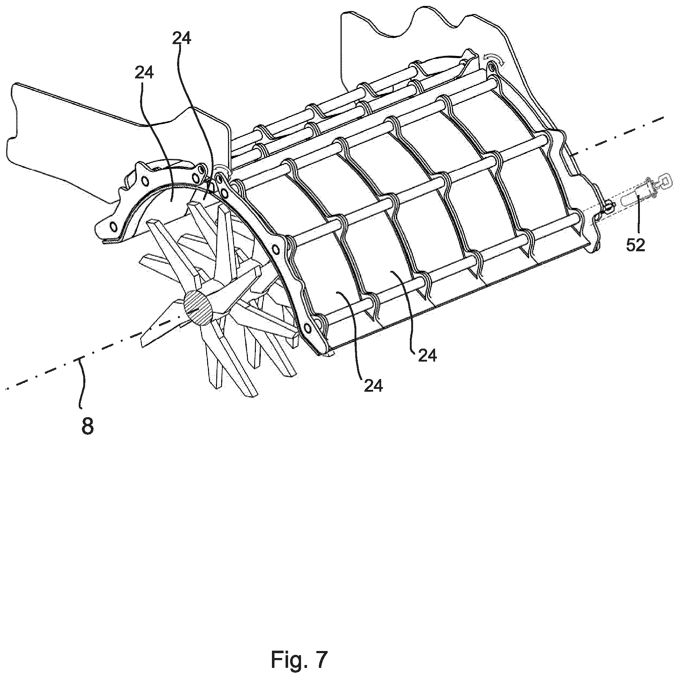

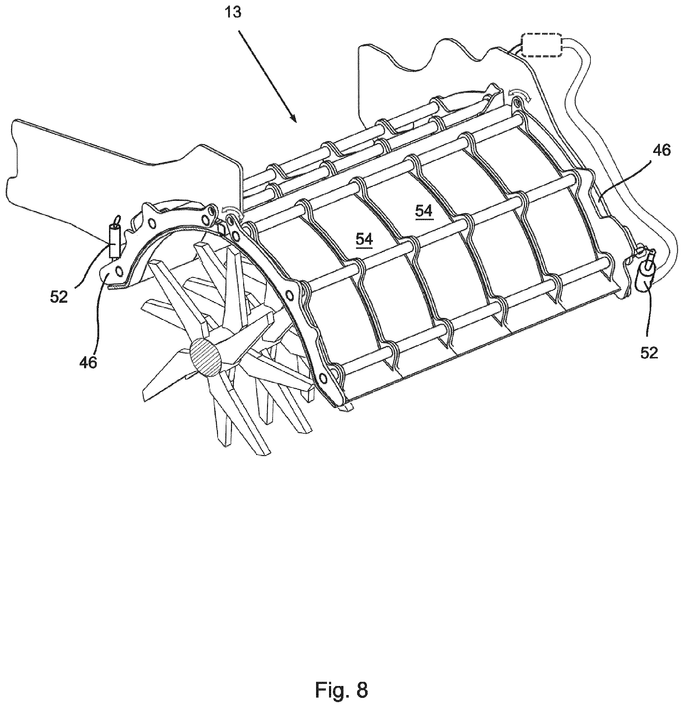

Eine landwirtschaftliche Arbeitsmaschine ist vorliegend eine als Bodenfräse ausgebildete Bodenbearbeitungsmaschine 2 (Fig. 1). Die Bodenbearbeitungsmaschine 2 weist eine mit einer Mehrzahl von Werkzeugen 4 versehene Welle 6 auf, deren Drehachse 8 (vergl. Fig. 5 und 7) sich im Betrieb angewinkelt zur Fahrtrichtung F erstreckt. Im Ausführungsbeispiel verläuft die Drehachse 8 parallel zum Untergrund 10 (Fig. 6). Die Bodenbearbeitungsmaschine 2 umfasst des Weiteren ein an einem Rahmen 12 gehaltenes Gehäuse 13 (Fig. 2 und 8), welches über einen Umfangswinkel von nahezu 180° (Fig. 5) um die Welle 6 und deren Drehachse 8 herum angeordnet ist.

Das Gehäuse ist bezüglich einer Lotrechten 15, die durch die Drehachse 8 verläuft, in einem Schwenkwinkel von nahezu +/- 90° oberhalb der Drehachse und somit oberhalb der Welle angeordnet (Fig. 5). Zwischen Welle 6 und Innenwandteilen 18 der vorderen und hinteren Gehäuseteile 20, 22 des Gehäuses ist ein Kanal 16 ausgebildet, in dem und durch den der Boden bzw. die Erde aufbereitet gefördert wird.

Der vordere Gehäuseteil 20 und der hintere Gehäuseteil 22 sind beweglich angeordnet und können um Schwenkachsen 32, die oberhalb der Welle 6 angeordnet sind, verschwenken (Fig. 6). Hierfür sind die Gehäuseteile 20, 22 über Längsträger 30 schwenkbar in Seitenblechen 14 und Mittelblechen 17 des Rahmens 12 gelagert. Die Gehäuseteile 20, 22 erstrecken sich insbesondere komplett über die Länge der Welle 6 und können die beiden in der Fig. 6 übereinander dargestellten Betriebspositionen sowie zusätzlich nicht dargestellte Zwischenpositionen einnehmen. Entsprechend sind in Fig. 6 jeweils zwei Innenwandteile 18 des vorderen und hinteren Gehäuseteils dargestellt. In den beiden dargestellten Betriebspositionen unterscheiden sich die beiden fest einstellbaren Betriebspositionen des vorderen Gehäuseteils 20 dadurch, dass in einer aufgeschwenkten, oberen Betriebsposition eine Vorderkante 34 weiter nach vorne und höher bezüglich des Untergrunds 10 ist, als die Vorderkante 34 in der eingeschwenkten, unteren Position. Analoges gilt für die hintere Kante 36 des hinteren Gehäuseteils 22. Die Beweglichkeit der vorderen und hinteren Gehäuseteile 20, 22 wird durch Doppelpfeile 38 im Bereich von Schwenklagern 40 indiziert.

Allgemein wird das Gehäuse der Bodenbearbeitungsmaschine 2 durch einen vorderen und hinteren Gehäuseteil 20 und 22 ausgebildet, wobei die Innenwand des Gehäuses durch die beiden (vorderen und hinteren) Innenwandteile 18 ausgebildet wird.

Die Innenwandteile 18 ihrerseits und somit auch die Innenwand des Gehäuses werden erfindungsgemäß jeweils durch mehrere in Fahrtrichtung betrachtet nebeneinander angeordnete, identische Segmente 24 ausgebildet. Die Segmente 24 sind flächig, insbesondere streifenförmig, ausgebildet und parallel zur Fahrtrichtung bzw. in Umfangsrichtung um die Welle herum betrachtet länger als breit. Hiermit wird der Tatsache Rechnung getragen, dass die maßgebliche Bewegung der Erde und somit der Verschleiß ebenfalls in Fahrtrichtung und in Umfangsrichtung um die Welle 6 herum erfolgt. Besonders verschleißanfällige Bereiche, je nach Werkzeugkonfiguration, können somit auf einfache Weise ersetzt werden, ohne dass die komplette Gehäusewand bzw. Innenwand des Gehäuses 13 ersetzt werden muss. Sowohl der vordere als auch der hintere Gehäuseteil 20, 22 sind aus den Segmenten 24 mit aufgebaut. Zusätzlich zu den Segmenten 24 können wie vorbeschrieben Ausgleichsstücke vorgesehen werden, welche die Welle 6 vorteilshafterweise nahezu vollständig in einem erdflussoptimierten Winkelbereich umgrenzen.

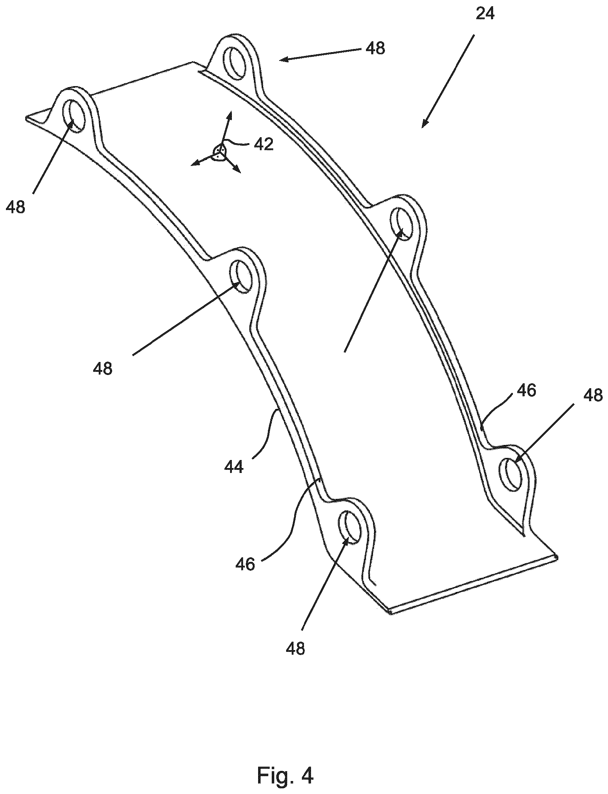

Die Segmente 24 sind vorliegend vollständig durch ein elastomeres Material einer Shorehärte A zwischen 75 und 95 ausgebildet und können entsprechend schwingen bzw. vibrieren, insbesondere in einer Richtung parallel zur Lotrechten 42 (Fig. 4).

Die Segmente 24 weisen entlang ihrer Längskanten 44 verlaufene Längsstege 46 auf, die die Segmente 24 aussteifen. Gleichzeitig bilden die Längsstege 46 durch verdickte, erweiterte Bereiche Aufnahmen 48 aus, über die die Segmente 24 an den Querträgern 28 befestigt sind. Diese wiederum sind in den Längsträgern 30 gelagert, wobei ein oder mehrere Querträger 28 über nicht dargestellte Langlöcher relativ beweglich gegenüber den Längsträgern 30 gelagert sein können. Quer- und Längsträger 28, 30 bilden jeweils Gehäuseteilerahmen aus, der schwenkbeweglich gegenüber dem Rahmen 12 ist, wodurch die Gehäuseteile und somit auch die Segmente 24 unterschiedliche Betriebspositionen einnehmen können.

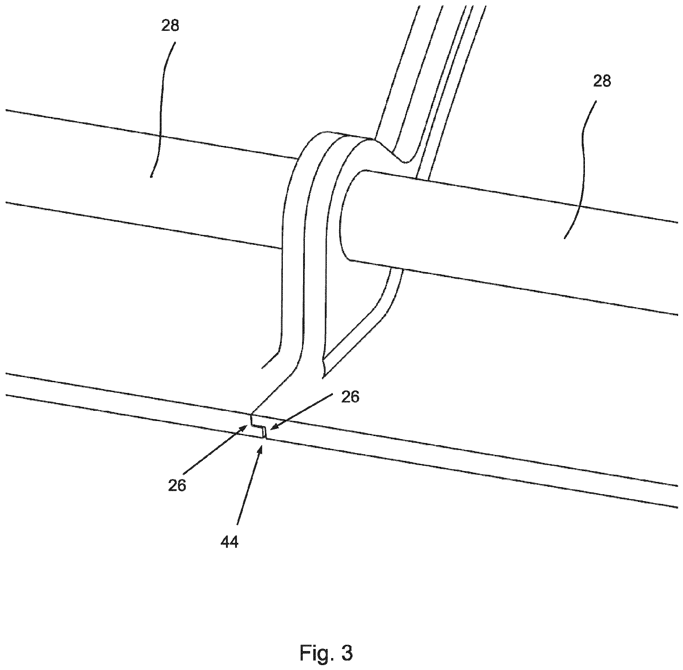

Zur besseren und besser dichtenden Anlage der Segmente aneinander weisen diese entlang der Längskanten 44 Rücksprünge bzw. Schultern 26 auf, die auf den einander zugewandten Seiten komplementäre Formen besitzen (Fig. 3) und über die in der Anlage aneinander eine Dichtung erzeugt wird, aufgrund derer die Erde verbessert im Kanal 16 gehalten wird. Nebeneinander angeordnete Segmente 24 sind somit teilweise überlappend angeordnet.

Die Aufnahmen 48 stellen Befestigungsmittel auf, die zur Befestigung an dem Gehäuserahmen oder auch zur Befestigung aneinander dienen können. Entsprechend der verschiedenen Betriebszustände der hinteren und vorderen Gehäuseteile 20, 22 weisen auch die Segmente 24 entsprechend unterschiedliche Betriebszustände mit unterschiedlichen Abständen der Innenwand von der Drehachse 8 auf.

Zusätzlich ist die Bodenbearbeitungsmaschine 2 mit einer nur gestrichelt dargestellten und endseitig der Welle 6 angeordneten Wellenstellvorrichtung 50 versehen, über die die Welle in die in der Fig. 6 gestrichelt dargestellten Position überführbar und dort festlegbar ist. Über die Wellenstellvorrichtung 50 ist diese in der Höhe verstellbar am Rahmen 12 der Bodenbearbeitungsmaschine 2 angeordnet.

Sowohl der vordere als auch der hintere Gehäuseteil 20, 22 sind über ein vorderes sowie ein hinteres Stellmittel 52 verstellbar, nämlich um die jeweilige Schwenkachse 32 verstellbar, die beispielsweise in der Fig. 5 jeweils senkrecht zur Figurenebene verläuft. Beispielsweise handelt es sich bei dem Stellmittel 52 um einen Hydraulikzylinder, der rahmenseitig festgelegt ist und an einem seitlichen Längsträger 46 befestigt ist (Fig. 8) oder um eine einfache mechanische Festlegung der Gehäuseteile 20, 22 am Rahmen 12 mittels eines in seiner Länge veränderbaren Schraubmittels (Fig. 7).

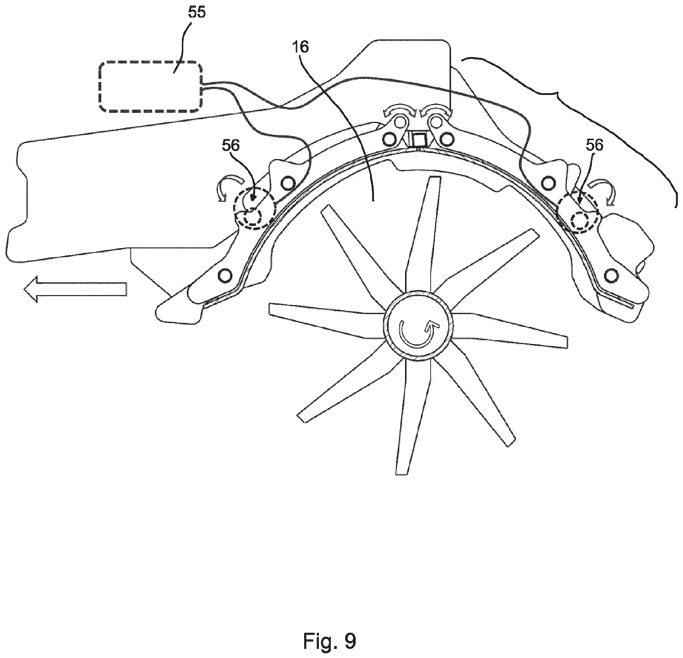

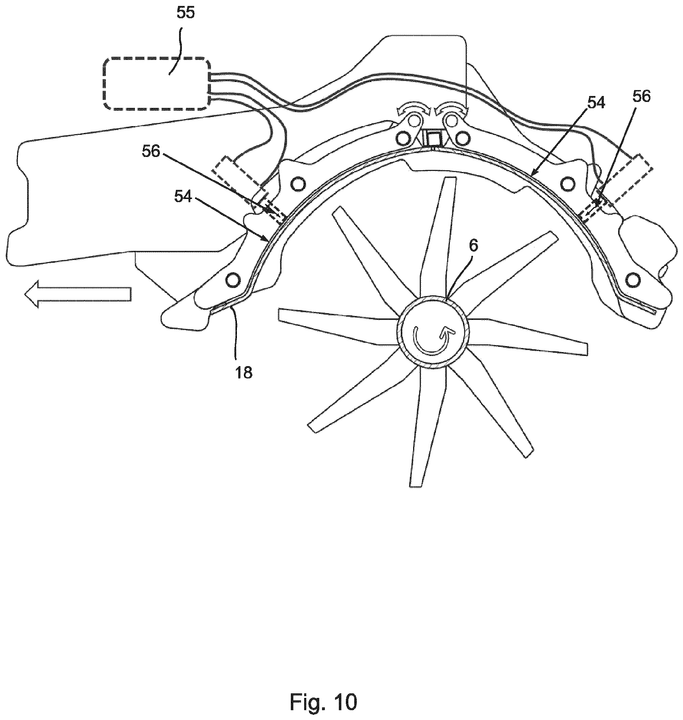

Von rahmenseitig angeordneten Vibrationserzeugern werden über deren Vibrationsmittel 56 Vibrationen auf die äußeren Oberflächen 54 übertragen. Hierdurch werden insbesondere geschwindigkeitsabhängig über eine entsprechende Steuervorrichtung 55, die Teil der Maschinensteuerung der Arbeitsmaschine sein kann, die Drehzahlen von Vibrationsmitteln 56 in Form von exzentrisch angeordneten Drehscheiben bzw. die Frequenzen von Vibrationsmitteln 56 in Form von senkrecht zur Oberfläche 54 längsbeweglichen Stempeln vorgegeben (Fig. 9 und 10).

## Patentansprüche

1. Landwirtschaftliche Arbeitsmaschine, insbesondere in Form einer vorzugsweise als Bodenfräse ausgebildeten Bodenbearbeitungsmaschine (2), umfassend eine mit wenigstens einem Werkzeug (4) versehene Welle (6), deren Drehachse (8) sich im Betrieb angewinkelt zur Fahrtrichtung (F) und zumindest im Wesentlichen parallel zum Untergrund (10) erstreckt, und umfassend ein an einem Rahmen (12) der Arbeitsmaschine angeordnetes Gehäuse, welches zumindest abschnittsweise oberhalb der Welle (6) angeordnet ist und eine einen Kanal (16) zwischen Welle (6) und Gehäuse (13) begrenzende Innenwand aufweist, **dadurch gekennzeichnet, dass** die Innenwand des Gehäuses durch mehrere in Fahrtrichtung (F) betrachtet nebeneinander angeordnete Segmente (24) zumindest mit ausgebildet ist.

2. Arbeitsmaschine nach Anspruch 1, **dadurch gekennzeichnet, dass** die Segmente (24) flächig und/oder identisch ausgebildet sind.

3. Arbeitsmaschine nach Anspruch 1 oder 2, **dadurch gekennzeichnet, dass** das Gehäuse bezüglich der Fahrtrichtung (F) einen vorderen und einen hinteren Gehäuseteil (20,22) mit jeweiligen Innenwandteilen (18) aufweist, die sich jeweils entlang der Welle (6) erstrecken und von denen der eine durch die mehreren nebeneinander angeordnete Segmente (24) ausgebildet ist und von denen der andere ebenfalls durch mehrere in Fahrtrichtung (F) betrachtet nebeneinander angeordnete weitere Segmente (24) zumindest mit ausgebildet ist.

4. Arbeitsmaschine nach Anspruch 3, **dadurch gekennzeichnet, dass** die Segmente (24) des vorderen und des hinteren Gehäuseteils (20,22) identisch ausgebildet sind.

5. Arbeitsmaschine nach einem der vorherigen Ansprüche, **dadurch gekennzeichnet, dass** die Segmente (24) zumindest überwiegend durch ein elastomeres Material ausgebildet sind.

6. Arbeitsmaschine nach einem der vorherigen Ansprüche, **dadurch gekennzeichnet, dass** die Segmente (24) parallel zur Fahrtrichtung (F) betrachtet länger als breit sind.

7. Arbeitsmaschine nach einem der vorherigen Ansprüche, **dadurch gekennzeichnet, dass** die Segmente (24) wenigstens einen vorzugsweise entlang einer Längskante (44) verlaufenden Längssteg (46) aufweisen.

8. Arbeitsmaschine nach einem der vorherigen Ansprüche, **dadurch gekennzeichnet, dass** die Segmente (24) auf zumindest einer Längsseite einen Rücksprung (26) aufweisen, dergestalt, dass nebeneinander angeordnete Segmente (24) teilweise überlappend angeordnet sind.

9. Arbeitsmaschine nach einem der vorherigen Ansprüche, **dadurch gekennzeichnet, dass** die Segmente (24) auf ihrer von der Welle (6) abgewandten Seite Befestigungsmittel zur Befestigung an dem Rahmen (12), einem Gehäuserahmen oder aneinander aufweisen.

10. Arbeitsmaschine nach einem der vorherigen Ansprüche, **dadurch gekennzeichnet, dass** zur Versteifung zumindest eines der Segmente (24) wenigstens ein Querträger (28) vorhanden ist.

11. Arbeitsmaschine nach einem der vorherigen Ansprüche, **dadurch gekennzeichnet, dass** die Segmente (24) eine Mehrzahl von Betriebszuständen mit unterschiedlichen Krümmungsradien aufweisen.

12. Arbeitsmaschine nach einem der vorherigen Ansprüche, **dadurch gekennzeichnet, dass** eine Stellvorrichtung vorgesehen ist, über die die Position und/oder der Krümmungsradius der Innenwand bezogen auf die Welle (6) veränderbar ist.

13. Arbeitsmaschine nach einem der vorherigen Ansprüche, **dadurch gekennzeichnet, dass** dem hinteren Gehäuseteil (22) wenigstens ein hinteres Stellmittel (52) der Stellvorrichtung zugeordnet ist, über dass die hintere Kante (36) des hinteren Gehäuseteils (22) in der Höhe und/oder entlang der Fahrtrichtung (F) verstellbar ist.
